# EUROPÄISCHE PATENTSCHRIFT

(11) **EP 0 884 869 B1**
(45) Veröffentlichungstag und Bekanntmachung des Hinweises auf die Patenterteilung: **23.07.2003**
(21) Anmeldenummer: 97115564.3
(22) Anmeldetag: 08.09.1997
(51) Int. Cl.: H04L 9/32

(54) **Verfahren zur sicheren Anzeige bei der Übertragung von Daten oder Dateien zwischen Teilnehmern**
Process for secure displaying during transmission of data or files between users
Procédé d'affichage sécurisé lors de la transmission de fichiers ou de données entre utilisateurs

(30) Priorität: 13.06.1997 DE 19725167
(43) Veröffentlichungstag der Anmeldung: 16.12.1998
(73) Patentinhaber: Utimaco Safeware AG, D-61440 Oberursel (DE)
(72) Erfinder: Schmid, Kurt, 61440 Oberursel (DE)
(74) Vertreter: Freiherr von Gravenreuth, Günter, Dipl.-Ing. (FH)

(56) Entgegenhaltungen:
- US-A- 5 168 371
- US-A- 5 349 642
- US-A- 5 499 294

## Beschreibung

Die Erfindung betrifft ein Verfahren zur sicheren Anzeige bei der Übertragung von Daten oder Dateien zwischen Teilnehmern.

In der Datenverarbeitung gibt es in unterschiedlichsten Anwendungsbereichen sensible Daten und Dateien. Hierbei kann es sich um Textdateien, Daten und/oder Dateien aus Datenbanken, Bild-Informationen, Online-Informationen, Multi-Media-Anwendungen, Online Transaktionen und ähnliches, Programme für die Datenverarbeitung im Object- oder Source-Code oder um beliebige sensible Daten handeln. Die nachfolgend näher beschriebene Erfindung ist nicht auf einen bestimmten Daten oder Dateityp beschränkt.

Es ist seit längerer Zeit bekannt, Daten oder Dateien mit sensiblen Inhalten zu verschlüsseln. Durch die verschiedenen bekannten Verschlüsselungsverfahren wird (mit unterschiedlichen Qualitätsniveau) sichergestellt, daß unbefugte Dritte derartige Daten oder Dateien nicht verstehen können.

Bei den Übermittlungen von sensiblen Daten und Dateien stellen sich je nach deren Art weitere unterschiedliche Sicherheitsanforderungen an die Übermittlung. Es kann wichtig sein,
a) daß die Zuordnung über die elektronische "Unterschrift" zwischen einem Objekt (Datei oder Datum) und einem Subjekt (Person und/oder Computer) beweiskräftig ist,
b) daß sichergestellt ist, daß die versandten Daten und/oder Dateien mit jenen Daten und/oder Dateien, welche angekommen sind, inhaltlich bis auf das letzte Bit übereinstimmt, also unverändert sind und/oder
c) daß bei der Übermittlung von zwei Dateien, zwei Daten oder einer Datei und einem Datum, welche jeweils zueinander eine definierte Beziehung haben, sichergestellt ist, daß diese Beziehung unverändert auch nach der Übertragung vorliegt. Eine derartige Verbindung wäre beispielsweise eine elektronische Unterschrift zu einer Datei oder einem Datum. Hierbei muß bei der Übertragung sichergestellt sein, daß die elektronische Unterschrift "unter" jenen Daten und/oder Dateien steht, welches nach Ansicht des "Unterschreibenden" die elektronische Unterschrift tragen soll, also daß nicht gänzlich andere Daten und/oder Dateien mit dieser elektronischen Unterschrift versehen werden, und/ oder
d) daß das angewandte Verfahren zur Identifizierung sensibler Daten und/oder Dateien im Rahmen der Ausführung des Verfahrens nicht verändert wurde, daß also der Absender und der Empfänger mit dem identischen Verfahren arbeiten, so daß sichergestellt ist, daß nicht durch ein Veränderung des Verfahrens sensible Dateien in unerwünschter Weise verändert werden und/oder
e) daß sichergestellt ist, daß der Dateiinhalt wie er sich dem Betrachter auf dem Bildschirm bietet, inhaltlich identisch mit der tatsächlichen Datei ist, daß also versteckte, auf dem Bildschirm nicht angezeigte Dateiinhalte oder Daten ebenso fehlen wie versteckte Verknüpfungen zu einer oder mehreren anderen Dateien, so daß unter Berücksichtigung aller Verknüpfungen der tatsächliche Dateiinhalt größer oder anders ist, als jener, welcher dem Betrachter auf dem Bildschirm präsentiert wird.

Die üblichen Betriebssysteme stellen die Größe einer Datei, ausgedrückt in Bytes als Information über die Datei oder das Datum zur Verfügung. Zwei identische Dateien oder Daten müssen daher dieselbe Anzahl von Bytes aufweisen. Umgekehrt bedeuten jedoch dieselbe Anzahl von Bytes nicht zwingend eine Identität zweier Dateien oder Daten.

Aus diesem Grunde wurden Verfahren entwickelt, um mit einer hohen Wahrscheinlichkeit die Identität von Dateien oder Daten aufgrund quantitativer Kriterien bestimmen zu können.

Die gebräuchlichsten Verfahren sind hierbei Prüfsummen-Verfahren.

Die Qualität derartiger Verfahren ist sehr unterschiedlich. So sind beispielsweise Verfahren bekannt, bei denen lediglich die auf dem konkreten Datenträger für eine konkrete Datei belegten Blöcke "gezählt" und ihre Summen als Vergleichszahl verwendet wird. Dieses Prüfverfahren beinhaltet selbstverständlich keinerlei Aussagen hinsichtlich des Inhalts der Daten-Blöcke, es ist nicht einmal eindeutig, ob jeder Block voll beschrieben ist. Minimale Abweichungen in der Dateilänge, soweit durch diese Abweichungen nicht die Gesamtzahl der Blöcke sich verändert, werden durch derartige Prüfverfahren nicht erkannt.

Bessere Prüfsummen-Verfahren sind u.a. der Cyclic Redundancy Check (CRC).

Das wohl gebräuchlichste derartige Verfahren sind die Hash-Funktionen.

Im Gegensatz zur bloßen Fehlererkennung in Prüfsummen-Verfahren können kryptografische Verfahren die Identität von Dateien und Daten durch die Generierung von elektronischen Siegeln mit höchster Sicherheit gewährleisten. Elektronische Siegel können auf folgende Weise generiert werden:
1. Nach Verfahren wie z.B. dem Message Authentication Code (MAC) werden aus Daten oder Dateien unter Einbeziehung eines Schlüssels direkt die elektronischen Siegel erzeugt oder verifiziert.
2. Über den Mechanismus eines Hash-Codes und einer elektronischen Unterschrift kann das elektronische Siegel wie folgt generiert werden:
   a. Erstellung eine kryptografischen Prüfsumme aus den zugehörigen Daten und/oder Dateien, beispielsweise über eine Hash-Funktion. Bei den Hash-Funktionen werden nicht feste Blöcke, sondern Inhalte geprüft. Die wichtigste Anforderung an eine Hash-Funktion ist dabei die Kollisionsfreiheit. Hier wird gefordert, daß es nach einer böswilligen Änderung einer Datei nicht möglich sein soll, denselben Hash-Wert, wie vor der Manipulation zu erhalten. Umgekehrt kann zu einem vorgegebenen Hash-Wert kein Dokument generiert werden, das diesen Hash-Wert erzeugt.
   b. Berechnung der elektronischen Unterschrift mit dem geheimen Schlüssel des Erzeugers und in Verbindung mit den Daten und/oder Dateien oder deren Hash-Code.

Nachteil dieses Verfahrens ist jedoch, daß nicht garantiert werden kann, daß die so elektronisch signierten Daten und/oder Dateien selbst nicht bereits in irgendeiner Weise verändert worden sind. Es ist beispielsweise denkbar, daß ein Teilnehmer Daten oder Dateien elektronisch signiert ohne zu erkennen, daß hierin auch weitere unerwünschte Daten enthalten sind oder, daß er für ihn nicht erkennbar, nur einen Teil der Daten oder Dateien signiert.

*Aus der US-A-5 499 294 ist ein Verfahren zur Übertragung von Daten oder Dateien zwischen Teilnehmern bekannt, welches derart ausgestaltet ist, daß von der ersten Urform der Datei oder der Daten durch einen ersten Transformationsprozeß eine erste grafische Abbildung der ersten Urform erzeugt wird. In einem zweiten Schritt wird von der ersten Abbildung ein elektronisches Siegel generiert, welches anschließend mit der ersten Urform der Datei an einen Empfänger übermittelt wird. In einem weiteren Schritt wird durch den Empfänger mit dem selben Transformationsprozeß eine zweite grafische Abbildung der bei ihm angekommenen Urform erzeugt. Bei dieser technischen Lösung kann der Versender nicht (mehr) kontrollieren, was er mit dem Private Key" signiert hat. So ist es beispielsweise möglich, daß auf dem Bildschirm eine andere Information angezeigt wird, als jene, welche als Datei gespeichert und übermittelt wird.*

*Aus der US-A-5 349 642 ist es bekannt, daß die Übersendung der ursprünglichen Datei mit einem Siegel, welches aus einer Transformation der ursprünglichen Datei generiert wurde, zu versehen. Beim Empfänger werden dann das übertragene Siegel mit einem vom Empfänger generierten Siegel, welches aus einer Transformation der übertragenen ursprünglichen Datei erzeugt wird, auf Identität verglichen. Falls diese empfängerseitig ermittelte Signatur mit der vom Sender erzeugten Signatur übereinstimmt, wird Authentizität angenommen, in technischer Hinsicht jedoch nicht sichergestellt.*

Der Erfindung liegt daher die Aufgabe zugrunde, ein Verfahren zu schaffen, bei dem sichergestellt ist, daß nur eindeutig identifizierte und eindeutig integere Daten und/oder Dateien mit einer elektronischen Unterschrift versehen werden. Diese Aufgabe wird erfindungsgemäß durch den kennzeichnenden Teil des Anspruches 1) gelöst.

Die Erfindung geht hierbei von folgenden Verfahrensschritten aus.

Die fraglichen Daten und/oder Dateien, werden als grafische Abbildung nochmals erfaßt. Ein definierter Transformationsprozeß erzeugt hierbei von der Urform der Daten oder der Datei eine grafische Abbildung. Wenn die Urform der Datei beispielsweise eine Text-Datei ist, so wird diese nach der Syntax der verwendeten Textverarbeitung als ASCII-ähnliche Daten und/oder Dateien (zzgl. der Steuerzeichen) erfaßt. In dieser Form kann die Datei dann (in Verbindung mit entsprechenden Grafik- oder Druckertreibern) auf dem Bildschirm und dem Drucker ausgegeben werden. Die nicht beschriebenen Flächen auf dem Bildschirm oder eines Ausdruckes sind bei den fraglichen Dateien nicht erfaßt.

Demgegenüber wird bei der vorgenannten grafischen Abbildung, welche beispielsweise über eine Vektor-Grafik erzeugt werden kann, die Urform der Daten und/oder Dateien nicht als Text, sondern als Bild gesehen. Jeder einzelne Punkt eines Zeichens und jeder einzelne Punkt einer nicht beschriebenen Fläche wird hierbei als grafisches Element definiert und so erfaßt. Konsequenterweise werden somit nur jene Elemente erfaßt, welche auf dem Bildschirm zu sehen sind, so daß verdeckte Elemente, wie Steuerzeichen, Makros etc., wie sie beispielsweise in Textdateien vorkommen, nicht Bestandteil der grafischen Datei werden. Man kann ein Datum oder eine Datei so ändern, daß die Größe des Datums oder der Datei unverändert bleibt. Allein über die Größe eines Datums oder einer Datei können Veränderungen somit nicht festgestellt werden. Derartige Veränderungen erzeugen jedoch eine andere Darstellung auf dem Bildschirm oder dem Drucker. Sie sind also sichtbar und erzeugen somit eine andere Abbildung.

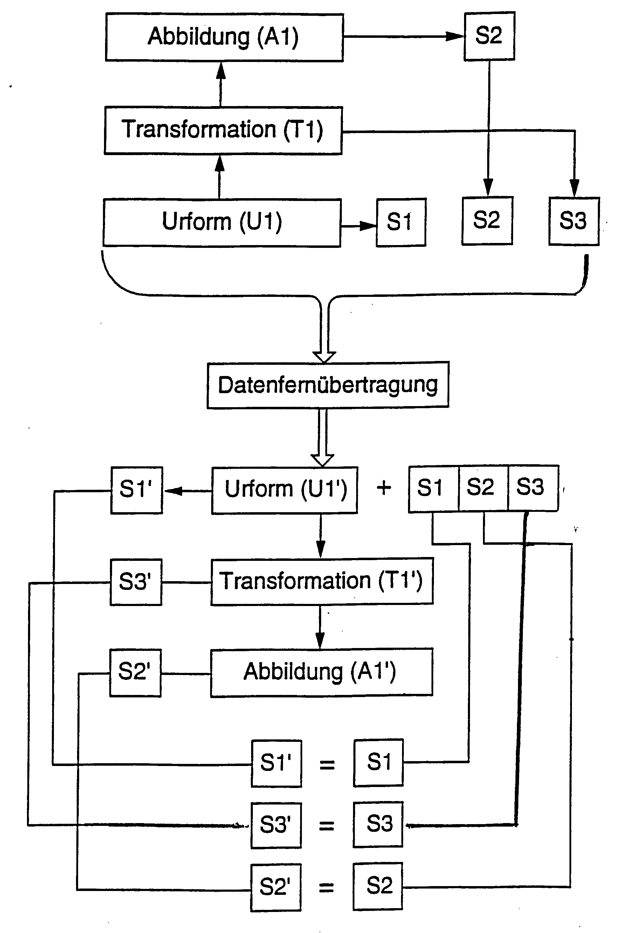

In einem weiteren Schritt wird sowohl für die Urform der Daten und/oder Dateien, als auch für deren grafische Abbildung über ein Prüfsummen-Verfahren, beispielsweise über ein Hash-Verfahren je ein eindeutiger Wert, beispielsweise der betreffende Hash-Wert ermittelt und erfaßt. Die betreffenden Werte werden nachfolgend als erstes elektronisches Siegel ( von der Urform der Daten und/oder Dateien) und zweites elektronisches Siegel (von der Abbildung der Daten und/oder Dateien) genannt.

In einem dritten Schritt wird die Urform der Daten und/oder Dateien oder deren Abbildung zusammen mit den beiden elektronischen Siegeln an den Empfänger übermittelt werden. Es liegt auf der Hand, daß, sofern es erforderlich ist, auch die Urform der Daten und/oder Dateien oder deren Abbildung für die Übermittlung verschlüsselt werden kann.

In einem weiteren Schritt erzeugt der Empfänger aus der ihm übermittelten (ggf. wieder entschlüsselten) Urform der Daten und/oder Dateien mit demselben Transformationsprozeß ebenfalls eine Abbildung der Datei.

In einem weiteren Schritt wird von dieser Abbildung der Daten und/oder Dateien nach demselben Verfahren ein drittes elektronisches Siegel erstellt.

Wenn die vom Empfänger erzeugte Abbildung der Urform der Daten und/oder Dateien identisch ist, mit der vom Absender erzeugten Abbildung der Urform der Datei, dann muß auch das vom Empfänger mit demselben Transformationsprozeß generierte elektronische Siegeln identisch sein mit jenem Siegel, welches zusammen mit der Datei an den Empfänger übermittelt wurde. Eine Abweichung dieser beiden elektronischen Siegel bedeutet, daß die vom Empfänger nach demselben Transformationsprozeß erzeugte Abbildung nicht identisch ist mit jener, welche vom Absender erzeugt wurde. Die Konsequenz ist, daß auch die empfangene Urform der Datei verändert sein muß. Dies gilt auch dann, wenn die reine Dateigröße und/oder Abbildung der abgesandten und der empfangenen Urform der Datei identisch sind.

Ein komplexer Transformationsprozeß kann auch aus mehreren Teilen bestehen. Erfindungsgemäß können zu derartigen Teilen auch eigene Siegel generiert und in erfindungsgemäßer Weise wie die vorbeschriebenen Siegel eingesetzt werden.

Auch können Siegel zu geeigneten Komponenten der Systemumgebung z.B. zu laufenden Prozessen generiert werden. Je mehr Siegel in erfindungsgemäßer Weise generiert und eingesetzt werden, um so sicherer ist das Verfahren.

Die vorliegende Erfindung wird nachfolgend anhand eines Ausführungsbeispiels und der Zeichnung erläutert.

Der Benutzer hat eine erste Urform (U1) eines Datums oder einer Datei. Hierzu erzeugt er ein erstes elektronisches Siegel (S1). Durch einen ersten Transformationsprozeß (T1) erzeugt er eine erste (grafisches) Abbildung (A1) der ersten Urform (U1) des fraglichen Datums oder der fraglichen Datei.

Von der ersten Abbildung (A1) wird in einem weiteren Verfahrensschritt ein zugehöriges zweites elektronisches Siegel (S2) erzeugt. Dieses zweite elektronische Siegel (S2) wird in geeigneter Weise mit der ersten Urform (U1) verbunden, beispielsweise angehängt. Das so gebildete Datenpaket wird dann an den gewünschten Empfänger übermittelt. Der Empfänger kann von der bei ihm angekommenen Urform (U1') mittels desselben Transformationsprozeß (T1') wieder eine zweite Abbildung (A1') erzeugen. Anschließend erzeugt er über dasselbe Verfahren das zugehörige dritte Siegel (S2') neu.

Wenn die bei ihm angekommene Urform (U1') identisch ist mit jener ersten Urform (U1), welche versandt werden sollte, dann müssen auch die jeweils erzeugten Siegel (S1 und S1', bzw. S2 und S2') identisch sein. Jede Abweichung wäre ein Beweis für eine Abweichung zwischen der zur Versendung anstehenden ersten Urform (U1) und der angekommenen Urform (U1').

### Bezugszeichenliste

| | |
|---|---|
| erste Urform | U1 |
| angekommene Urform | U1' |
| erster Transformationsprozeß | T1 |
| zweiter Transformationsprozeß | T1' |
| erste grafische Abbildung | A1 |
| zweite grafische Abbildung | A1' |
| erstes elektronisches Siegel | S1 |
| zweites elektronisches Siegel | S2 |
| drittes elektronisches Siegel | S1' |
| viertes elektronisches Siegel | S2' |

## Patentansprüche

1. Verfahren zum Authentisieren von zu übertragenden Daten oder Dateien durch den Absender und zum Identifizieren sowie Verifizieren der Integrität der empfangenen Daten und Dateien durch den Empfänger **dadurch gekennzeichnet, dass**
• beim Absender eine Urform (U1) einer Datei oder von Daten mittels eines Transformationsprozesses (T1) als eine graphische Abbildung (A1) dieser Urform (U1) dargestellt wird,
• aus der grapbischen Abbildung (A1) mittels eines vorgegebenen Verfahrens ein Siegel (S2) generiert wird,
• die Urform (U1) der Daten oder Dateien und das elektronische Siegel (S2) an den Empfänger übermittelt werden,
• dann durch den Empfänger
• daß in einem weiteren Schritt der Empfänger mit demselben Transformationsprozeß (T1') eine zweite grafische Abbildung (A1') der bei ihm angekommenen Urform (U1') erzeugt,
• aus der zweiten graphischen Abbildung (A1') mittels desselben Verfahrens, das auch beim Absender verwendet wurde ein abgeleitetes zweites elektronisches Siegel (S2') generiert wird
• das vom Absender übermittelte elektronische Siegel (S2) der zweiten graphischen Abbildung (A1') und das durch den Empfänger generierte abgeleitete zweite elektronische Siegel (S2') der vom Empfänger erstellten zweiten graphischen Abbildung (A1') der Daten auf Identität überprüft werden.

2. **Verfahren nach Anspruch 1 dadurch gekennzeichnet**,
• dass aus der Urform (U1) der Datei oder Daten mittels eines vorgegebenen Verfahrens ein weiteres elektronisches Siegel (S1) errechnet wird,
• dass durch den Empfänger mittels desselben Verfahrens, welches auch beim Absender verwendet wurde, aus der Urform (U1) der Daten oder Dateien ein abgeleitetes elektronisches Siegel (S1') generiert wird,
• dass dieses abgeleitete Siegel (S1') mit dem weiteren elektronischen Siegel (S1) verglichen wird, welches vom Absender aus der Urform (U1) der Daten oder Dateien generiert und übermittelt wurde.

3. **Verfahren nach Anspruch 1 oder 2, dadurch gekennzeichnet, dass** die Urform (U1) der Daten oder Dateien in elektronischer Form vorliegt und die graphische Abbildung (A1) übertragen und für den Absender sichtbar dargestellt wird.

4. **Verfahren nach Anspruch einem der Ansprüche 1 bis 3 dadurch gekennzeichnet, dass** die vom Empfänger erstellte, abgeleitete zweite Abbildung (A1') der Daten oder Datei für den Empfänger sichtbar dargestellt wird.

## Claims

1. Process for authorizing data or data files designated for transmission by the sender as well as for identifying and verifying the integrity of the data and data files received by the recipient, **characterized in that**
• an original form (U1) of a data file or data is displayed at the sender's end as a graphic illustration (A1) of the said original form (U1) by means of a transformation process;
• a seal (S2) is generated from the graphic illustration (A1) by means of a given process;
• the original form (U1) of the data or data files and the electronic seal (S2) is transmitted to the recipient;
• then by the recipient;
• the recipient - in a further stage - generates a second graphic illustration (A1') of the original form (U1') as received by the recipient, applying the same transformation process (T1');
• a derived second electronic seal (S2') is generated from the second graphic illustration (A1') by means of the same process that has been applied by the sender;
• the electronic seal (S2) of the second graphic illustration (A1') transmitted by the sender and the second derived electronic seal (S2') of the second graphic illustration (A1') of the data generated by the recipient are checked for identity.

2. **Process according to Claim 1, characterized in that**
• an additional electronic seal (S1) is computed from the original form (U1) of the data file or data by means of a given process;
• a derived electronic seal (S1') is generated from the original form (U1) of the data or data files by the recipient by means of the same process that has been applied by the sender;
• the said derived seal (S1') is compared with the additional electronic seal (S1) that has been generated and transmitted by the sender from the original form (U1) of the data or data files.

3. **Process according to Claim 1 or 2, characterized in that** the original form (U1) of the data or data files exists in electronic form and the graphic illustration (A1) is transmitted and visibly displayed to the sender.

4. **Process according to one of the claims 1 to 3, characterized in that** the derived second illustration (A1') of the data or data files that have been generated by the recipient is visibly displayed to the recipient.

## Revendications

1. Procédé servant à l'expéditeur d'établir l'authenticité de données ou fichiers transférés et à l'identification et la vérification de l'intégrité des données et fichiers reçus par le destinataire, **caractérisé en ce que**
• une forme primitive (U1) d'un fichier ou de donnés est représentée au moyen d'un processus de transformation (T1) en tant que représentation graphique (A1) de cette forme primitive (U1) chez l'expéditeur,
• un sceau (S2) est généré à partir de la représentation graphique (A1) au moyen d'un procédé déterminé,
• la forme primitive (U1) des données ou fichiers et le sceau électronique (S2) est transmise au destinataire,
• ensuite par le destinataire
• dans une seconde étape, le destinataire génère une seconde représentation graphique (A1') de la forme primitive qui est arrivée chez lui (U1'), par le même processus de transformation (T1'),
• un second sceau électronique dérivé (S2') est généré à partir de la seconde représentation graphique (A1') au moyen du même procédé employé chez l'expéditeur,
• l'identité du sceau électronique envoyé par l'expéditeur (S2) de la seconde représentation graphique (A1) et celle du second sceau électronique dérivé généré par le destinataire (S2') de la seconde représentation graphique créée par le destinataire (A1') des données sont vérifiées.

2. **Procédé selon la revendication 1 caractérisée en ce que**,
• à partir de la forme primitive (U1) du fichier ou des données un nouveau sceau électronique (S1) est calculé au moyen d'un procédé déterminé,
• à partir de la forme primitive (U1) des données ou fichiers un sceau électronique dérivé (S1') est généré par le destinataire au moyen du même procédé employé également par l'expéditeur,
• ce sceau dérivé (S1') est comparé au nouveau sceau électronique qui avait été généré par l'expéditeur à partir de la forme primitive (U1) des données ou fichiers et qui avait été transmis.

3. **Procédé selon la revendication 1 ou 2, caractérisé en ce que** la forme primitive (U1) des données ou fichiers est disponible sous forme électronique et la représentation graphique (A1) est transmise et représentée de façon visible pour l'expéditeur.

4. **Procédé selon l'une des revendications 1 à 3, caractérisé en ce que** la seconde représentation dérivée (A1') des données ou fichier créée par le destinataire est représentée de façon visible pour le destinataire.
